# EUROPEAN PATENT APPLICATION

(11) **EP 4 567 693 A1**
(43) Date of publication of application: **11.06.2025**
(21) Application number: 23850008.6
(22) Date of filing: 28.07.2023
(51) Int. Cl.: G06Q 10/0635

(54) **INFORMATION PROCESSING DEVICE, INFORMATION PROCESSING METHOD, AND PROGRAM**

(30) Priority: 03.08.2022 JP 2022123919
(71) Applicant: Suntory Holdings Limited, Osaka 530-8203 (JP)
(72) Inventor: KAWASAKI, Masatoshi, Kyoto 619-0284 (JP); WATANABE, Reiji, Kyoto 619-0284 (JP); SUZUKI, Ken, Kyoto 619-0284 (JP); GOTO, Nozomi, Kyoto 619-0284 (JP)
(74) Representative: Vossius & Partner Patentanwälte Rechtsanwälte mbB
(86) International application number: PCT/JP2023/027711
(87) International publication number: WO 2024/029453

(57) **Abstract**

There has been a demand for acquiring information on the future water balance of a target area. An information processing apparatus 1 includes: a monitoring information acquiring unit 143 that acquires monitoring information on an environmental factor related to a circulation state of water resources in a target area; a determining unit 145 that determines whether or not a predetermined condition regarding a change in the monitoring information acquired by the monitoring information acquiring unit 143 is satisfied; a factor value acquiring unit 147 that acquires a future factor value that is a predicted future value of the environmental factor related to the change in the monitoring information, in a case in which it is determined that the predetermined condition is satisfied; a calculating unit 151 that acquires a water balance calculated value regarding a balance of the water resources in the target area, based on the future factor value; and an output unit 160 that outputs information on a future circulation state of the water resources in the target area, based on the water balance calculated value. Accordingly, it is possible to acquire information on a circulation state indicating the future water balance in the target area.

## Description

### Technical Field

The present invention relates to an information processing apparatus, an information processing method, and a program that are capable of being used for managing water resources in a space with a certain range of spatial extent.

### Background Art

In recent years, for example, when operating facilities such as factories, awareness is required of the amount of water resources in spatial units of areas with a certain range of spatial extent, such as units of facilities or units of watersheds that include the facilities. For example, the amount of water resources in a target area is monitored, the results of the monitoring are analyzed, and the results of the analysis are utilized for production activities, water resource operational management, water resource protection activities, and the like. For such activities, it is desirable that future predictions are made considering time scales as well, so that an effective future plan can be formulated and appropriate operational management can be carried out.

That is to say, conventionally, for example, when production activities are carried out in factories or the like, a large amount of water resources is used for, for example, boilers, raw materials, product processing, equipment cleaning, equipment cooling, cleaning water for temperature control equipment, and the like, regardless of the type of product to be produced. Examples of facilities that use water resources include facilities that own their own wells and withdraw water therefrom, and facilities that use tap water or industrial water purchased from the government or municipalities. In either water withdrawal method, water resources within or near the watershed surrounding the facility are used.

Whether or not it is possible to continuously operate a facility depends on the sustainability of water resource security in the watershed surrounding the facility. In order to increase the sustainability of securing water resources, it is important not only to improve the efficiency of water resource use at the facility, but also to formulate a facility operation plan such that the influence on water resources in the watershed surrounding the facility can be reduced. Specifically, for example, in formulating a facility operation plan, it is necessary to pay close attention to various indicators related to water such as a river level, a groundwater level, and a spring water discharge. In addition, if the sustainability of securing water resources in the watershed surrounding the facility is estimated to be low, it is necessary to formulate an implementation plan for paddy field recharge activities and forest conservation activities, for example, in order to protect water resources.

Incidentally, it is not easy to accurately understand the behavior of water in a certain range of geosphere environment with a certain extent. Water is recharged and stored as groundwater or flows out of the area through evaporation, transpiration, rainfall, snowfall, river flow, infiltration, groundwater flow, seepage, and various other processes between various systems such as the atmosphere, the ground surface, and the underground.

Therefore, in order to check the sustainability of securing water resources in units of facilities and units of watersheds that include the facilities, it is necessary to monitor the circulation state of water resources within the watersheds. In addition, it is necessary to appropriately manage the flow rate, the amount of storage, and the amount of fluctuations of the water resources (hereinafter referred to as a water balance in a target area) in units of facilities and units of watersheds that include the facilities. The water balance in a target area may also be said to be an indicator indicating the circulation state of water resources in the target area.

However, it is not realistic to understand all environmental factors related to the water balance in a target area at all locations in the watersheds. In particular, if recharge amounts at locations that are difficult to access, such as mountainous areas, or groundwater flow rates, which are difficult to directly observe, are to be managed, observation values thereof cannot be acquired, and therefore it is difficult to carry out appropriate management.

Considering such problems, conventionally, water circulation models may be used for water resource management. Such water circulation models include so-called lumped models and distributed water circulation models (see Non-Patent Document 1, for example).

Lumped models are characterized by the fact that the models require less data, are relatively easy to calculate, and can be easily systematized. However, with lumped models, it may be relatively difficult to achieve high accuracy in reproducing and predicting the water circulation.

On the other hand, with distributed water circulation models, the target space is divided into small meshes, and the water circulation can be reproduced according to the physical laws of the water circulation in each mesh. Therefore, it is possible to reproduce phenomena similar to the real water circulation with relatively high accuracy. That is to say, distributed water circulation models are suitable for the purpose of managing the production capacity of facilities, for example (see Non-Patent Documents 2 and 3). Examples of such distributed water circulation models include those described in Patent Document 1 and Non-Patent Document 4.

### Citation List

### Patent Document

Patent Document 1: JP 2011-13753A

### Non-Patent Documents

Non-Patent Document 1: Nihon Suido Consultants Co., Ltd., "Bunpu-gata kozui yosoku moderu / Nihon Suido Consultants Co., Ltd. - Uruoi aru mirai e", [online], [accessed on June 12, 2020], Internet <URL: http://www.nissuicon.co.jp/jigyou/kasen/kouzui-yosoku/>
Non-Patent Document 2: Hiroyuki TOSAKA, Keiji KOJIMA, Akio MIKI, and Takeshi CHINO, "Numerical Simulation of Surface-Subsurface-Coupled, 2-Phase, 3-Dimensional Fluid Behavior", Journal of groundwater hydrology, 1996, Vol. 38, No. 4, p. 253-267
Non-Patent Document 3: Koji MORI, Kazuhiro TADA, Sou SATO, Nobuko KAKIZAWA, Yoshimi UCHIYAMA, Naohide YOKOYAMA, and Masanobu YAMANE, "The 3 Dimensional Water Circulation Models for Water Source Forest Area in Kanagawa Prefecture", Bulletin of the Kanagawa Prefecture Natural Environment Conservation Center, 10 (2013) 215-223
Non-Patent Document 4: McDonald, Michael G. and Arlen W. Harbaugh, "A modular three-dimensional finite-difference ground-water flow model", Techniques of water-resources investigations (1984)

### Summary of Invention

### Technical Problem

As described above, in order to enable production activities and the like in a sustainable manner using facilities with water resources in units of facilities and units of watersheds that include the facilities, it is necessary to appropriately make decisions regarding the use of water resources and the like. In order to appropriately make such decisions, it is necessary to acquire information on the future water balance of the target area, and to be able to appropriately understand possible future risks.

It is an object of the present invention to provide an information processing apparatus, an information processing method, and a program that are capable of acquiring information on the circulation state indicating the future water balance in a target area.

### Solution to Problem

A first aspect of the present invention is directed to an information processing apparatus including: a monitoring information acquiring unit that acquires monitoring information on an environmental factor related to a circulation state of water resources in a target area; a determining unit that determines whether or not a predetermined condition regarding a change in the monitoring information acquired by the monitoring information acquiring unit is satisfied; a factor value acquiring unit that acquires a future factor value that is a predicted future value of the environmental factor related to the change in the monitoring information, in a case in which it is determined that the predetermined condition is satisfied; a calculating unit that acquires a water balance calculated value regarding a balance of the water resources in the target area, based on the future factor value; and an output unit that outputs information on a future circulation state of the water resources in the target area, based on the water balance calculated value.

With this configuration, it is possible to acquire information on the circulation state indicating the future water balance in the target area.

Furthermore, a second aspect of the present invention is directed to the information processing apparatus according to the first aspect, wherein the monitoring information relates to two or more environmental factors, and the factor value acquiring unit specifies an environmental factor related to the change in the monitoring information, out of the two or more environmental factors, in a case in which it is determined that the predetermined condition is satisfied, and acquires the future factor value of the specified environmental factor.

With this configuration, it is possible to acquire a future factor value of an environmental factor that causes a change, and to easily acquire information on a future circulation state in the target area.

Furthermore, a third aspect of the present invention is directed to the information processing apparatus according to the first or second aspect, wherein the calculating unit acquires the water balance calculated value using a distributed water circulation model in which the circulation state of the water resources in the target area is modeled, the model being configured using a large number of meshes that are obtained by dividing the target area into a grid pattern and that are each subjected to application of values related to two or more environmental factors.

With this configuration, it is possible to acquire accurate information on the circulation state indicating the future water balance in the target area.

Furthermore, a fourth aspect of the present invention is directed to the information processing apparatus according to any one of the first to third aspects, wherein the factor value acquiring unit further acquires information indicating uncertainty of the future factor value, the calculating unit further acquires information on uncertainty of the water balance calculated value, based on the future factor value and the information indicating uncertainty thereof, and the output unit performs the output, based on the water balance calculated value and the information indicating uncertainty thereof.

With this configuration, it is possible to acquire information on the circulation state indicating the future water balance in the target area, based on information indicating the uncertainty of the water balance calculated value.

Furthermore, a fifth aspect of the present invention is directed to the information processing apparatus according to the fourth aspect, wherein the factor value acquiring unit acquires the future factor value and the information indicating uncertainty thereof, for each of two or more environmental factors, and the calculating unit acquires, for each environmental factor, primary information on uncertainty of the water balance calculated value, based on the information indicating uncertainty of the future factor value of the environmental factor, and acquires information on uncertainty of the water balance calculated value by synthesizing (averaging) the primary information respectively acquired for the two or more environmental factors.

With this configuration, it is possible to acquire information on the circulation state indicating the future water balance in the target area, based on information indicating the uncertainty of the water balance calculated value.

Furthermore, a sixth aspect of the present invention is directed to the information processing apparatus according to any one of the first to fifth aspects, wherein the calculating unit is configured to be able to acquire the water balance calculated value based on values related to two or more environmental factors, the information processing apparatus further includes an extracting unit that extracts an environmental factor whose influence on the water balance calculated value is large enough to satisfy a predetermined condition, by causing the calculating unit to acquire the water balance calculated value while changing the value of each environmental factor, thereby performing a sensitivity analysis on an influence of the environmental factor on the water balance calculated value in the target area, and the monitoring information acquiring unit is configured to acquire monitoring information on the environmental factor extracted by the extracting unit.

With this configuration, it is possible to acquire a future factor value of an environmental factor that may cause a large change, and to easily acquire information on a future circulation state in the target area.

Moreover, a seventh aspect of the present invention is directed to an information processing method including: an acquiring step of acquiring monitoring information on an environmental factor related to a circulation state of water resources in a target area; a determining step of determining whether or not a predetermined condition regarding a change in the monitoring information is satisfied; a factor value acquiring step of acquiring a future factor value that is a predicted future value of the environmental factor related to the change in the monitoring information, in a case in which it is determined that the predetermined condition is satisfied; and a calculating step of acquiring a water balance calculated value regarding a balance of the water resources in the target area, based on the future factor value, wherein the method is used to evaluate a risk related to the water resources in the target area or to conduct research on implementation of a measure to prevent manifestation of the risk.

With this method, it is possible to evaluate risks related to water resources in the target area or to conduct research on implementation of measures to prevent manifestation of such risks, using information on the circulation state indicating the future water balance in the target area.

Furthermore, an eighth aspect of the present invention is directed to the information processing method according to the seventh aspect, wherein in the factor value acquiring step, information indicating uncertainty of the future factor value is further acquired, in the calculating step, information on uncertainty of the water balance calculated value is further acquired based on the future factor value and the information indicating uncertainty thereof, and the information processing method further includes a comparing step of comparing the water balance calculated value with a predetermined threshold value, based on the information on uncertainty of the water balance calculated value.

With this information, it is possible to evaluate risks or to conduct research on implementation of measures to prevent manifestation of such risks, based on the information on the uncertainty of the water balance calculated value.

### Advantageous Effects of Invention

According to the information processing apparatus and the like of the present invention, it is possible to acquire information on the circulation state indicating the future water balance in a target area.

### Brief Description of Drawings

FIG. 1 is a diagram illustrating an example of a distributed water circulation model according to an embodiment of the present invention.
FIG. 2 is a flowchart illustrating the use of the distributed water circulation model.
FIG. 3 is a block diagram of an information processing apparatus in Embodiment 1 of the present invention.
FIG. 4 is a flowchart showing an example of an operation of the information processing apparatus.
FIG. 5 is a flowchart showing an example of high-impact parameter extracting processing by the information processing apparatus.
FIG. 6 is a flowchart showing an example of quantitative evaluation that is performed by the information processing apparatus.
FIG. 7 is a diagram showing a relationship between elements regarding water circulation in a target area according to an application example of this embodiment.
FIG. 8 is a diagram showing an example of a monitoring information according to this application example.
FIG. 9 is a diagram illustrating environmental factor specifying processing according to this application example.
FIG. 10 is a diagram showing an example of temperature prediction data according to this application example.
FIG. 11 is a diagram showing an example of information indicating a future circulation state of water resources according to this application example.
FIG. 12 is a schematic view of a computer system in the foregoing embodiment.
FIG. 13 is a block diagram of the computer system.

### Description of Embodiment

Hereinafter, an embodiment of an information processing apparatus and the like will be described with reference to the drawings. It should be noted that constituent elements denoted by the same reference numerals in the embodiments perform similar operations, and thus a description thereof may not be repeated.

The terms used below are generally defined as follows. The meanings of these terms do not always have to be interpreted as indicated herein, and have to be interpreted in light of individual explanations below, if any, for example.

"Water resources" may be, for example, groundwater, river water, reservoir water such as water in lakes, spring water, or the like, but there is no limitation to this.

"Identifier of a certain item" is a character, a code, or the like that uniquely indicates the item. Examples of the code include, but are not limited to, alphanumeric characters and other symbols. An identifier is, for example, a code string that itself does not indicate a specific meaning, but any type of information may be used as long as it can identify a corresponding item. That is to say, an identifier may be the exact name of what it indicates, or a combination of codes uniquely corresponding to what it indicates. A combination of two or more pieces of information (e.g., attribute values of records recorded in a database) may be used as an identifier.

"Acquiring" may include acquiring an item that is input by a user or the like, or acquiring information stored in the apparatus or another apparatus (the information may be information stored in advance or information generated through information processing in the apparatus). "Acquiring information stored in another apparatus" may include acquiring information stored in the other apparatus via an API or the like, or acquiring the content of a document file (including the webpage content, etc.) provided by the other apparatus.

Furthermore, a so-called machine learning method may be used to acquire information. A machine learning method may be used as follows, for example. That is to say, a learning model (learning information) in which a particular type of input information is taken as input and the type of output information that is to be acquired is taken as output is configured using a machine learning method. For example, two or more pairs of input information and output information are prepared in advance, the two or more pairs of information are given to a module for configuring a learning model of machine learning to configure a learning model, and the configured learning model is accumulated in a storage unit. The learning model may also be said to be a classifier. There is no limitation on the machine learning method, and examples thereof include deep learning, random forests, and SVM. For example, functions in various machine learning frameworks and various existing libraries, such as fastText, tinySVM, random forest, and TensorFlow, can be used for the machine learning.

"Learning model" is not limited to those obtained through machine learning. The learning model may be a table indicating a correspondence between an input vector based on input information or the like and output information, for example. In this case, output information corresponding to a feature vector based on input information may be acquired from the table, or a vector that is close to a feature vector based on the input information may be generated using two or more input vectors in the table and parameters for weighting each input vector, and output information corresponding to the input vectors and parameters used in the generation may be used to acquire final output information. The learning model may be a function or the like representing a relationship between an input vector based on the input information or the like and information for generating output information, for example. In this case, for example, information corresponding to a feature vector based on input information may be obtained from a function, and the obtained information may be used to acquire output information.

"Outputting information" is a concept that encompasses display on a display screen, projection using a projector, printing by a printer, output of a sound, transmission to an external apparatus, accumulation in a recording medium, and delivery of a processing result to another processing apparatus or another program. Specifically, for example, this concept encompasses enabling information to be displayed on a webpage, transmission as an email or the like, and outputting information for printing.

"Accepting information" is a concept that encompasses accepting information input from an input device such as a keyboard, a mouse, or a touch panel, receiving information transmitted from another apparatus or the like via a wired or wireless communication line, and accepting information read from a recording medium such as an optical disk, a magnetic disk, or a semiconductor memory.

"Updating various types of information stored in an information processing apparatus or the like" is a concept that encompasses changing the stored information, adding new information to the stored information, and deleting part or the whole of the stored information.

### Embodiments

In this embodiment, the information processing apparatus is configured, for example, to be able to output information on the circulation state of water resources in nature, by means of a water circulation model. The circulation state of water resources may also be said to be water circulation. In nature, water circulates through rainfall from the air, recharge to the ground, discharge of groundwater to rivers and oceans, evaporation from the ground surface, oceans, and the like, and then rainfall from the air. The water circulation model is a model in which such a circulation state of water resources is modeled in a predetermined target area including a forest, a river, and another type of land. The target area can be set, for example, in units of factories or in units of watersheds that include factories. That is to say, the target area can be set in space units that each have a certain spatial extent. The water circulation model is, for example, a distributed water circulation model whose target area is divided into unit areas.

The unit areas may be areas called meshes that constitute the model, or may be areas that have been divided in some other ways. A unit area may be said to be a pre-divided area. For example, an area of a predetermined size identified by latitude and longitude may be set as a unit area.

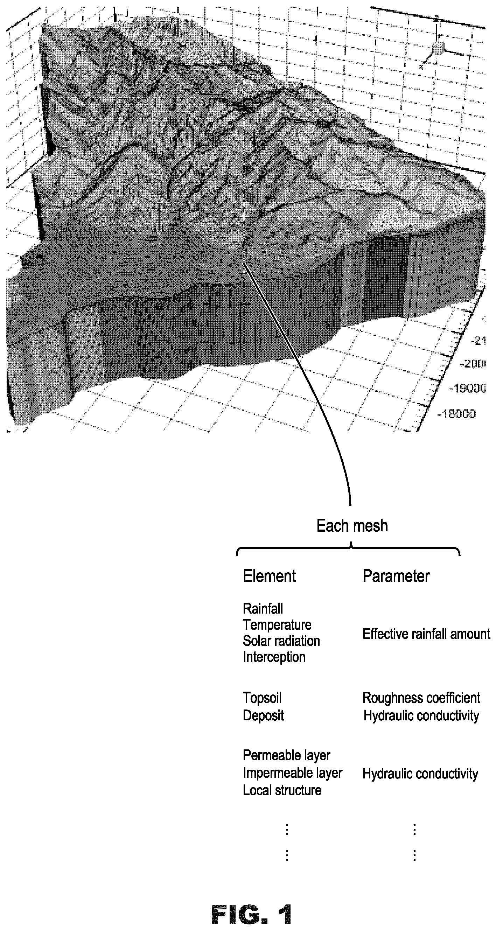

FIG. 1 is a diagram illustrating an example of a distributed water circulation model according to an embodiment of the present invention.

As shown in FIG. 1, in the following embodiment, the water circulation model is configured using a parameter group including two or more parameters. The distributed water circulation model is configured using a large number of meshes obtained by dividing a unit area into a grid pattern, each mesh being associated with position information that specifies the position of the mesh, and a parameter group including two or more parameters regarding the water circulation (hereinafter, which may be simply referred to as parameters) that are applied to each mesh. For each mesh of the distributed water circulation model, the values of the parameters are set to simulate the circulation state of water resources in the model. Position information on each mesh may be information indicating a relative positional relationship with an adjacent mesh, or information indicating an absolute position such as information indicating a position in a predetermined coordinate system. Information on each mesh can be configured by associating position information and the values of parameters with a mesh identifier for identifying the mesh, but there is no limitation to this. The parameters of the unit areas included in one watershed may be set to the same value.

The distributed water circulation model may be, for example, a known model such as "GETFLOWS (registered trademark)" or "MODFLOW", and "GETFLOWS (registered trademark)" is preferred in the following embodiment. Note that the water circulation model is not limited to a distributed model, and may be, for example, a lumped model.

The parameters regarding the water circulation include parameters that correspond to water balance items as well as parameters that do not correspond to water balance items. The parameters regarding the water circulation may also be said to be an environmental factor related to the circulation state of water resources.

The water balance items refer to parameters indicating the amount of elements related to water circulation. The water balance items may correspond to, for example, a rainfall amount, a river flow rate, an amount of evapotranspiration, a pumping amount, an amount of storage, an amount of their fluctuations, or the like. Roughly speaking, it can be concluded that the rainfall amount is equal to the sum of the river flow rate, the amount of evapotranspiration, the pumping amount, and the amount of change in storage in a certain area. Parameters regarding such amounts that represent the water balance can be referred to as water balance items. The water balance items are not limited to these, and can be defined for any amount related to water resources as appropriate depending on the purpose of understanding the water balance or the like.

On the other hand, parameters that are not water balance items can be said to be parameters that do not represent the amount of water, but parameters that represent the potential. For example, the parameters that are not water balance items may correspond to hydraulic conductivity, a groundwater level, or the like. The parameters that are not water balance items may be referred to as parameters that indicate properties or conditions related to water circulation.

The parameters are not limited to these, and various parameters are selected depending on the type of water circulation model or the like. For example, those related to elements such as weather, a ground surface, a shallow layer, and a deep layer (e.g., rainfall, temperature, topsoil, sediments, permeable layer, etc.), those related to human activities (e.g., water pumping, water withdrawal, drainage, etc.), and those related to location-specific properties can be set. More specifically, for example, parameters such as a rainfall amount, a river flow rate, an amount of evapotranspiration, a pumping amount, an amount of change in storage, a temperature, a wind speed, a sunshine duration, a relative humidity, a crown cover, a plant canopy reservoir, a litter coverage, a litter storage, a snow cover-snow melt temperature, an albedo, a bulk transfer coefficient, a soil evaporation efficiency, a groundwater flow, an equivalent roughness coefficient, a groundwater flow, a hydraulic conductivity, an effective porosity, a solid-phase compressibility, a relative permeability, a capillary pressure, fluid properties, a fluid density, an air density, a fluid viscosity coefficient, and an air viscosity coefficient may be set.

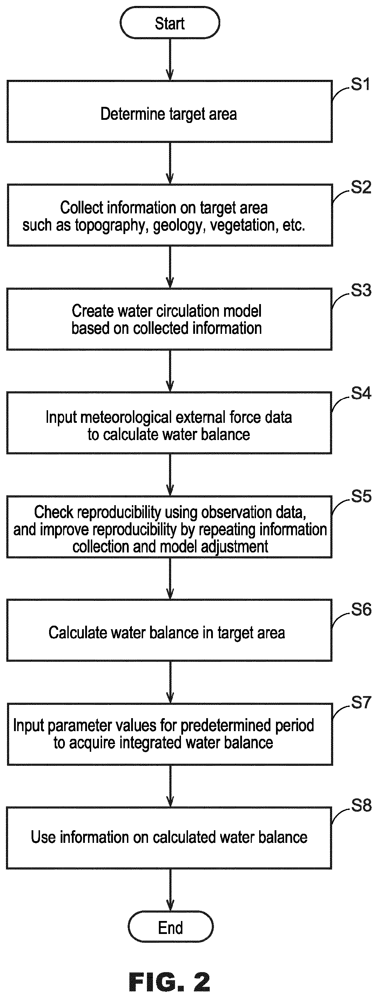

FIG. 2 is a flowchart illustrating the use of the distributed water circulation model.

Using the distributed water circulation model as described above, businesses and other users can acquire information on the water balance in a target area. The distributed water circulation model can be used, for example, in the following flow. Note that the following is merely an example, and various modifications may be made depending on the configuration and application of the distributed water circulation model.

(Step S1) That is to say, first, the target area for which information on the water balance is to be acquired is determined. Specifically, for example, in the case of acquiring information on the water balance around a factory that uses water resources, a recharge area such as a mountain forest located upstream of the factory, an area where the factory takes groundwater or river water, located downstream of the recharge area, and an area located further downstream thereof may be selected as the target area.

(Step S2) Information on the target area such as the topography, the geology, the vegetation, and the like thereof is collected. Various methods can be used to collect information, such as the method of making explorations, and the method of researching documents, databases, or the like in which information is recorded.

(Step S3) Using the collected information, the target area is modeled as a distributed water circulation model.

(Step S4) Meteorological external force data is input to the created distributed water circulation model to calculate the water balance.

(Step S5) The reproducibility of the model is checked using monitoring information. In addition, information collection and model adjustment are repeated to improve the reproducibility. Note that such work may be performed as necessary.

(Step S6) If the distributed water circulation model that can be used is complete up to this point, the water balance in the target area is calculated. The calculation can be performed using a computer in a known method, depending on the configuration of the distributed water circulation model employed.

(Step S7) Parameter values for a predetermined period are input to the distributed water circulation model to acquire an integrated water balance for the period.

(Step S8) Accordingly, it is possible to plan production activities and the like in the target area for the predetermined period, using the information on the calculated water balance (water balance calculated values).

Note that the calculation of the water balance calculated values can be performed by, for example, the processing unit of the information processing apparatus as will be described later, but there is no limitation to this.

The above-described use of the distributed water circulation model described is merely an example, and various modifications may be made depending on the configuration and application of the distributed water circulation model.

In this embodiment, the water balance calculated values relate to the flow rate or the amount of storage of the water resources in the target area, or the amount of change in each. More specifically, the water balance calculated values may relate to the flow rate or the amount of storage of groundwater in the target area, or the amount of change in each. That is to say, the water balance is a concept that indicates, for example, the flow rate, the amount of storage, and the amount of change of the water resources in the target area. The water balance calculated values can be calculated for each mesh, for example, and may be calculated for each specific location or for each partial area based on the calculation results for each mesh.

For example, for the purpose of managing groundwater resources, attention may be paid to the recharge amount, which is a parameter for water resource conservation, as the flow rate of the water resources. The flow rate of the water resources may include, for example, a recharge amount. In other words, in this embodiment, it can be said that the water balance calculated values relate to the recharge amount of groundwater in the target area. Here, recharge mainly refers to the supply of water from the ground surface to the groundwater surface, and the recharge amount refers to the amount of water supplied. If attention is paid to the recharge amount of groundwater in the target area in this manner, the amount of water recharged as groundwater, the amount of water flowing into a particular area as groundwater, the groundwater level, and the like can be calculated and understood as the water balance calculated values. Note that the water balance calculated values are not limited to the above examples, and the amount related to water resources can be appropriately defined according to the purpose of understanding the water balance.

For example, for the purpose of managing ground surface water resources such as river water, attention may be paid to the flow rate during a drought. In such a case, the amount of water flowing out to the ground surface as spring water, the amount of water flowing into rivers as river water, the amount of rainfall in a forest relative to the amount of rainfall outside the forest, the outflow rate of water relative to the amount of rainfall outside the forest, and the outflow rate of water relative to the amount of rainfall in the forest, and the like can be calculated and understood as the water balance calculated values.

Furthermore, for example, for the purpose of managing soil water resources, attention may be paid to soil moisture content for agriculture. In such a case, for example, the amount of water infiltrating as soil water can be calculated and understood as water balance calculated values.

In this embodiment, the information processing apparatus uses monitoring information associated with an environmental factor that acts on water circulation to acquire water balance calculated values in a target area based on the future factor value of the environmental factor corresponding to the monitoring information, in the case in which a predetermined condition regarding a change in the monitoring information is satisfied. In this case, an environmental factor related to the change in the monitoring information may be specified in the case in which a predetermined condition regarding a change in the monitoring information is satisfied. A water circulation model, which is a process-based model that reproduces the circulation state of water resources in a target area, may be used to acquire water balance calculated values. Information on the uncertainty of the water balance calculated values is preferably acquired together with the water balance calculated values. An environmental factor selected as an important indicator in the target area is preferably taken into account. Hereinafter, an information processing apparatus 1 with this configuration will be described.

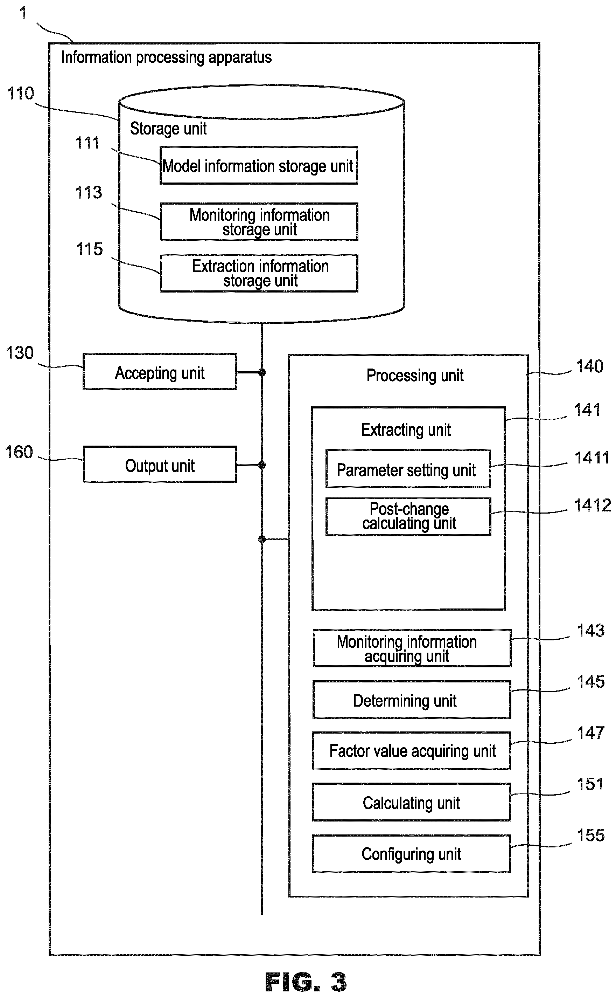

FIG. 3 is a block diagram of the information processing apparatus 1 in Embodiment 1 of the present invention.

As shown in FIG. 3, the information processing apparatus 1 includes a storage unit 110, an accepting unit 130, a processing unit 140, and an output unit 160. The information processing apparatus 1 is, for example, a personal computer, but is not limited to this, and may be a server apparatus, a mobile information terminal, or the like. The information processing apparatus 1 may be constituted by one server, multiple servers that operate in cooperation with each other, or an electronic computational machine or the like incorporated in another device. Note that the servers may be so-called cloud servers, ASP servers, or the like, and any type of servers may be used.

The storage unit 110 includes a model information storage unit 111, a monitoring information storage unit 113, and an extraction information storage unit 115. The storage unit 110 is preferably a non-volatile recording medium, but may alternately be realized by a volatile recording medium. Although information accepted by the accepting unit 130, information acquired by the processing unit 140, and the like are stored in the units of the storage unit 110, there is no limitation on the information or the like that is stored in the units of the storage unit 110 or the procedure in which the information or the like is stored. For example, the information or the like may be stored in the storage unit 110 via a recording medium, the information or the like transmitted via a communication line or the like may be stored in the storage unit 110, or the information or the like input via an input device may be stored in the storage unit 110.

Information on a distributed water circulation model is stored in the model information storage unit 111. The information on a distributed water circulation model includes, for example, information on each of the meshes that constitute the model. For example, the values of the environmental factors (parameters) applied to the meshes are stored in the model information storage unit 111. Information or the like with which the position of each mesh can be specified is stored in the model information storage unit 111. Information on each model is stored in association with a target area. That is to say, if information on two or more target areas is processed in the information processing apparatus 1, information on a model of each target area can be distinguished from other models.

Monitoring information on various environmental factors related to the circulation state of water resources in a target area is stored in the monitoring information storage unit 113. The monitoring information is observation data obtained by performing observation or the like on a predetermined monitoring item. The monitoring information is, for example, data obtained through measurement using a measuring device, data obtained through explorations, data acquired from an observation agency, or the like, but there is no limitation to these. Each piece of monitoring information is stored, for example, in association with an identifier for identifying an environmental factor corresponding thereto. The monitoring information is, for example, associated with position information corresponding to the observation location, but there is no limitation to this. The position information may be information indicating the position, or information that can specify a mesh corresponding thereto. The monitoring information is, for example, associated with time information indicating the time at which observation was performed, but there is no limitation to this. The monitoring information may be time-series information, that is, information indicating the transition of the value of a certain environmental factor.

In this embodiment, for each target area, monitoring information is associated with an environmental factor corresponding thereto. The relationship between environmental factors and monitoring information does not have to be a one-to-one correspondence. Two or more environmental factors may be associated with one piece of monitoring information, or one environmental factor may be associated with two or more pieces of monitoring information. An example thereof will be described below. For example, monitoring information of the monitoring item that is "rainfall amount" may be stored in association with an identifier that can identify the environmental factor that is "rainfall amount". Monitoring information of the monitoring item that is "temperature" may be stored in association with an identifier that can identify the environmental factor that is "evapotranspiration in a predetermined area". Monitoring information of the monitoring item that is "observed water level at a predetermined location" may be stored in association with identifiers that can respectively identify environmental factors such as "rainfall amount", "evapotranspiration in a predetermined area", "soil properties such as topsoil or roughness in a predetermined area", "pumping amount by facilities under control", and the like. Monitoring information of the monitoring item that is "our/their own company's pumping amount" may be stored in association with an identifier that can identify the environmental factor that is "pumping amount by facilities under control". The monitoring information and environmental factors corresponding thereto are not limited to this. The monitoring information and the environmental factors taken into account, which are used for target areas, may be different for each target area according to their properties or the like, or may be set uniformly for the target areas.

Extraction information for specifying an environmental factor extracted through screening evaluation is stored in the extraction information storage unit 115. The extraction information is, for example, information in which an identifier for identifying an extracted environmental factor (high-impact parameter) and an identifier for identifying a distributed water circulation model are associated with each other, but there is no limitation to this.

The accepting unit 130 accepts information input using an input part connected to the information processing apparatus 1, and information input through an input operation performed using a reading device (e.g., a code reader) connected to the information processing apparatus 1 (including, for example, information read by the device). The accepted information is stored, for example, in the storage unit 110. The information that can be accepted by the accepting unit 130 may be input by any input part such as a numeric keypad, a keyboard, a mouse, or a menu screen. The accepting unit 130 may be realized by a device driver for an input part such as a numeric keypad or a keyboard, control software for a menu screen, or the like. The accepting unit 130 may also accept information such as voice input by a microphone, for example.

The processing unit 140 may be realized typically by an MPU, a memory, or the like. Typically, the processing procedure of the processing unit 140 is realized by software, and the software is stored in a recording medium such as a ROM. Note that the procedure may be realized also by hardware (dedicated circuits). The processing unit 140 performs various types of processing. The various types of processing are, for example, processing that is performed by the units of the processing unit 140 as follows.

In this embodiment, the processing unit 140 includes an extracting unit 141, a monitoring information acquiring unit 143, a determining unit 145, a factor value acquiring unit 147, a calculating unit 151, and a configuring unit 155.

The extracting unit 141 extracts an environmental factor whose influence on the water balance calculated values is large enough to satisfy a predetermined condition. The environmental factor that has a large influence on water balance calculated values may also be said to be a high-impact parameter. The high-impact parameter is extracted from the parameter group used in the distributed water circulation model. The number of high-impact parameters may be one or more.

Various conditions may be set as the predetermined conditions. In this embodiment, for example, the extracting unit 141 determines whether or not the result of sensitivity analysis satisfies a predetermined extraction condition, for each environmental factor. For example, a condition that the ratio of water balance calculated values before and after the value is changed is equal to or greater than a predetermined threshold value may be set as an extraction condition, as appropriate.

In this embodiment, the extracting unit 141 extracts high-impact parameters, by performing a sensitivity analysis on the influence of each parameter on the water balance calculated values. The extracting unit 141 performs a sensitivity analysis, by causing the calculating unit 151 to acquire water balance calculated values while changing the value of the environmental factor.

The extracting unit 141 includes a parameter setting unit 1411 and a post-change calculating unit 1412.

The parameter setting unit 1411 acquires observation data regarding one or more environmental factors and observation data regarding one or more water balance items from the storage unit 110. The observation data may be information on predetermined monitoring items stored in the monitoring information storage unit 113 as the monitoring information, or information that is other observation data stored in the storage unit 110.

The parameter setting unit 1411 sets the respective values of environmental factors such that the water balance calculated values calculated by the processing unit 140 using the values of the environmental factors corresponding to the acquired observation data and the values of other environmental factors correspond to the observation data regarding the acquired water balance items. That is to say, the parameter setting unit 1411 sets the respective values of the environmental factors so as to be reasonable values considering the observation data. For example, for environmental factors for which there is observation data corresponding thereto, the values corresponding to the observation data may be set, and the values of other environmental factors may be set within the range of possible values of the environmental factors, using an analysis method such as the Newton's method, so that the difference between the observed data of water balance and the water balance calculated values is within a predetermined value.

The post-change calculating unit 1412 calculates, for each environmental factor set by the parameter setting unit 1411, the water balance after changing the value of the environmental factor. The water balance calculated values calculated in this manner are referred to as post-change calculated values. That is to say, the post-change calculating unit 1412 acquires post-change calculated values.

In this embodiment, the post-change calculating unit 1412 acquires, for each environmental factor set by the parameter setting unit 1411, the post-change calculated values after changing the value of the environmental factor by a predetermined ratio. Specifically, for example, for each environmental factor, the set value is increased or decreased by 1 percent, and the post-change calculated values are calculated using the post-change values. Note that the ratio of change is not limited to the above example. Also, values used to calculate the post-change calculated values may be acquired by adding or subtracting a preset amount of change to or from the set value of each environmental factor.

The extracting unit 141 extracts, for each environmental factor, high-impact parameters based on the post-change calculated value calculated by the post-change calculating unit 1412. In this embodiment, the extracting unit 141 acquires, for each environmental factor, the water balance calculated value using the environmental factor group set by the parameter setting unit 1411. Thereafter, the differences between the acquired water balance calculated value and the post-change calculated value calculated by the post-change calculating unit 1412 are obtained. If the calculated difference of an environmental factor is equal to or greater than a predetermined threshold value, the environmental factor is extracted as a high-impact parameter. Note that the extracting unit 141 may extract an environmental factor as a high-impact parameter in the case in which the ratio between the water balance calculated value and the post-change calculated value is equal to or greater than a predetermined threshold value.

By performing a sensitivity analysis while changing such a value for each environmental factor, the extracting unit 141 can acquire high-impact parameters whose influence on the water balance calculated values is large enough to satisfy a predetermined condition, that is, environmental factors that are highly responsive to the water balance. The sensitivity analysis is performed using values changed from the values set by the parameter setting unit 1411, and therefore it is possible to check the sensitivity of each environmental factor within a range in the vicinity of the value that the environmental factor is likely to actually take.

Note that environmental factors set as extraction candidates by the extracting unit 141 (parameters to be subjected to the sensitivity analysis) may be limited. For example, environmental factors for which corresponding observation data can be acquired may not be subjected to the sensitivity analysis.

For example, the sensitivity analysis may be performed by assuming an equilibrium state (steady state) with effective rainfall amount acquired based on average weather conditions so that environmental factors that have a large influence on the water balance in the target area can be quickly extracted. Note that an effective porosity is an example of an environmental factor related to the state (non-steady state) in which weather conditions change, which is an actual phenomenon. Sensitivity regarding an environmental factor such as this effective porosity can be evaluated by performing a sensitivity analysis in a non-steady state after the sensitivities of other environmental factors have been evaluated in a steady state.

The extracting unit 141 may extract high-impact parameters in the following manner, for example. That is to say, the post-change calculating unit 1412 may change, for each environmental factor set by the parameter setting unit 1411, the value of the environmental factor to the maximum value and the minimum value of the possible range, and acquire two post-change calculated values. In this case, the extracting unit 141 may, for each environmental factor, extract the environmental factor as a high-impact parameter in the case in which the difference or ratio between the two post-change calculated values is equal to or greater than a predetermined threshold value. Specifically, for example, if the ratio between the two post-change calculated values is 1 percent or greater, the environmental factor can be extracted as a high-impact parameter. However, the threshold value and the determination method that employs two post-change calculated values are not limited to the above example. Alternatively, for example, the sensitivity analysis may be performed based on the post-change calculated values calculated using either one of the maximum value and the minimum value of the possible range that the environmental factor can take, and the water balance calculated values acquired using the environmental factor group set by the parameter setting unit 1411.

The monitoring information acquiring unit 143 acquires monitoring information on an environmental factor in a target area. For example, the monitoring information acquiring unit 143 acquires monitoring information input by the user, or acquires monitoring information from information acquired from an external apparatus. The monitoring information acquiring unit 143 accumulates the acquired monitoring information in the monitoring information storage unit 113.

In this embodiment, the monitoring information acquiring unit 143 acquires monitoring information on a high-impact parameter, which is an environmental factor extracted in advance by the extracting unit 141 as described above. For example, if the environmental factors "rainfall amount" and "evapotranspiration in a predetermined area" are extracted in advance as high-impact parameters for one target area, monitoring information of "rainfall amount", "temperature", and "observed water level at a predetermined location", which are monitoring items respectively corresponding to the environmental factors, are acquired. The relationship between the environmental factors and the monitoring items, that is, monitoring information to be acquired, is not limited to this.

The determining unit 145 determines whether or not a predetermined condition regarding a change in the monitoring information acquired by the monitoring information acquiring unit 143 is satisfied. The predetermined condition is, for example, a condition regarding the magnitude relationship between monitoring information for a specific monitoring item and a predetermined threshold value, or the fact that monitoring information indicating that a predetermined event has occurred for a specific monitoring item has been acquired, or the like, but there is no limitation to these. The predetermined condition is set, for example, for each monitoring item, but there may be a condition that is commonly applied to the monitoring information of the monitoring items. The predetermined condition is set, for example, for each target area, but there is no limitation to this. There may be a condition that is commonly applied to the target areas.

It is preferable to set the predetermined condition, for example, to those that can be related to phenomena such as the recharge amount decreasing, the groundwater amount decreasing, or the river flow rate decreasing, in a predetermined area. For example, the condition may be that the water level at a predetermined location falls below a predetermined threshold value, that the rainfall amount in a predetermined period falls below a predetermined threshold value, or that the pumping amount by facilities under control in a predetermined period exceeds a predetermined threshold value, but there is no limitation to these.

The factor value acquiring unit 147 acquires a future factor value that is a predicted future value of the environmental factor related to the change in the monitoring information, in the case in which the determining unit 145 determines that the predetermined condition is satisfied. In this embodiment, in the case in which it is determined that a predetermined condition regarding a change in the monitoring information on two or more environmental factors is satisfied, the factor value acquiring unit 147 specifies an environmental factor particularly related to the change, out of the two or more environmental factors related to the monitoring information. The factor value acquiring unit 147 acquires a future factor value of the specified environmental factor. In this case, the future factor values of the other environmental factors may not be acquired.

For example, in the case in which it is determined that a predetermined condition regarding a change in the monitoring information on the observed water level at a predetermined location is satisfied, the factor value acquiring unit 147 acquires a predicted future value of an environmental factor related to the change in the monitoring information of the observed water level. In this case, if the monitoring information of the observed water level in that target area is related to the environmental factors such as "rainfall amount", "pumping amount by facilities under control", and "amount of evapotranspiration", the factor value acquiring unit 147 specifies an environmental factor that caused the change for which the predetermined condition was satisfied, and acquires a future factor value of the environmental factor.

The future factor value is a predicted future value of an environmental factor. The future factor value can be said to be a value of the environmental factor predicted under a scenario involving a predetermined area, which is an estimated future value. The scenario involving a predetermined area may be those related to predictions of climate and land use plans in and around the predetermined area, or those related to predictions of global environmental changes. The future factor value is, for example, time-series information, but may be a predicted value at a predetermined point in time. Since the estimated scenario may change over time, the future factor value may vary depending on the time of the acquisition. If there are two or more estimated scenarios, future factor values for one environmental factor may be obtained for the respective scenarios.

The future factor value may be, for example, based on information published by various organizations or in documents. The future factor value may be based on the results of a simulation using an electronic computer or the like in accordance with a predetermined method. The future factor value may be information acquired by inference based on input information different from the information on the environmental factor, using learning information configured using a machine learning method.

The calculating unit 151 acquires water balance calculated values based on the values of the applied environmental factor group, using the distributed water circulation model. In this embodiment, the calculating unit 151 acquires water balance calculated values based on the future factor values acquired by the factor value acquiring unit 147. That is to say, the water balance calculated values are acquired after replacing the values of the environmental factors for which future factor values have been acquired, with the future factor values, among the values of the environmental factors applied in advance to the distributed water circulation model. That is to say, the future water balance calculated values are acquired using future factor values according to a scenario predicted at the point in time for the environmental factors related to the change in the monitoring information determined by the calculating unit 151 as satisfying the predetermined condition. The future water balance calculated values acquired in this manner can be said to represent the future situation more accurately than the future water balance calculated values acquired for the target area in the past.

In this embodiment, the calculating unit 151 is configured to be able to acquire water balance calculated values together with information on the uncertainty thereof, based on information indicating the uncertainty of the future factor value. The information indicating the uncertainty of the future factor value may be acquired by the factor value acquiring unit 147. The factor value acquiring unit 147 is configured, for example, to acquire information such as standard deviation and variance of a future factor value, as the information indicating the uncertainty thereof. For example, if a future factor value of the environmental factor "temperature" is acquired, information on the magnitude and likelihood of upward or downward deviation of the future factor value may be acquired.

The factor value acquiring unit 147 may be configured to acquire the future factor value and the information indicating the uncertainty thereof, for each of two or more environmental factors. In this case, the calculating unit 151 acquires, for each environmental factor, information on the uncertainty of the water balance calculated values (uncertainty information resulting from the future factor values), based on the information indicating the uncertainty of the future factor value of each environmental factor acquired by the factor value acquiring unit 147. Then, information on the uncertainty of the water balance calculated values is acquired by synthesizing the uncertainty information resulting from the future factor values respectively acquired for the two or more environmental factors. For example, synthesized standard uncertainty in the case in which uncertainty information for each environmental factor is taken as standard uncertainty can be obtained as information on the uncertainty of the water balance calculated values, but the method is not limited to this.

In this case, the information on the uncertainty of the water balance calculated values may be acquired based on the uncertainty of the distributed water circulation model. That is to say, the calculating unit 151 may acquire information on the uncertainty of the water balance calculated values resulting from the distributed water circulation model (uncertainty information resulting from the model), and acquire information on the uncertainty of the water balance calculated values based thereon, in the following manner. The information on the uncertainty of the water balance calculated values may be acquired based only on the uncertainty information resulting from the future factor value for each of the two or more environmental factors, may be acquired based only on the uncertainty information resulting from the model, or may be acquired by synthesizing both types of uncertainty information.

In the case of acquiring uncertainty information resulting from the model, for example, the calculating unit 151 creates two or more sample value groups including sample values within the range that each environmental factor can take, such that the sample values of at least one environmental factor are different from each other. In this embodiment, the calculating unit 151 creates two or more sample value groups such that the sample values of at least one high-impact parameter among the high-impact parameters extracted by the extracting unit 141 are different from each other. The sample value groups can be created by using, for example, a quantitative evaluation method such as the Monte Carlo method or the Latin hypercube sampling method. More preferably, the sample value groups for efficient quantification can be created by using the Latin hypercube sampling method. Note that the sample value groups may be created while, for each of the parameters with different values, changing the value thereof from the minimum value to the maximum value in the range of possible values thereof by a predetermined difference at a time, or created using various methods.

Next, the calculating unit 151 calculates a water balance by applying each of the created two or more sample value groups to the distributed water circulation model. The water balance calculated values calculated in this manner are referred to as sample calculated values. That is to say, the calculating unit 151 acquires sample calculated values corresponding to the sample value groups. The acquired sample calculated values are, for example, stored in the storage unit 110.

Subsequently, the calculating unit 151 acquires information on the uncertainty of the water balance calculated values acquired using the distributed water circulation model, based on the acquired sample calculated values corresponding to the sample value groups. In other words, the calculating unit 151 performs an uncertainty evaluation on the water balance calculated values, using the sample calculated values. For example, the calculating unit 151 calculates values related to the variation of the sample calculated values by performing statistical processing on two or more sample calculated values acquired using two or more sample value groups, and acquires the values as information on the uncertainty of the water balance calculated values. Specifically, for example, the standard deviation values calculated through statistical processing, or the values or confidence intervals acquired therefrom may be acquired as information on uncertainty, but there is no limitation to this.

In this case, in this embodiment, the calculating unit 151 acquires observation data regarding one or more environmental factors and observation data regarding one or more water balance items from the storage unit 110, for example. Acquisition of observation data can be performed in the same manner as the above-described method performed by the parameter setting unit 1411, but the method for acquisition is not limited to this example. The calculating unit 151 checks the sample value groups and the sample calculated values corresponding thereto against observation data, to confirm that the reproducibility of the sample calculated values calculated from the sample value groups with respect to the observation data is ensured. The determination that reproducibility is ensured can be made, for example, but not limited to, by determining that the difference between the pieces of observation data and the sample values and between the pieces of observation data and the sample calculated values are each within a predetermined value. The calculating unit 151 acquires the values related to the variation of the sample calculated values acquired through statistical processing performed using the sample calculated values of which reproducibility has been confirmed to be ensured, as information on uncertainty. In this manner, by using sample calculated values for which reliability has been confirmed by checking against observation data, it is possible to acquire information on the uncertainty of water balance calculated values with higher accuracy.

Note that, when performing an uncertainty evaluation on water balance calculated values of the target area, if the number of sample calculated values for the target area that are based on the water circulation model for which reproducibility has been confirmed is insufficient, it is preferable that the number of sample value groups to be generated, that is, the number of samples is increased so that a sufficient number of sample calculated values for which reproducibility has been confirmed can be acquired. Thus, it is possible to acquire highly accurate information on uncertainty.

If the calculating unit 151 acquires water balance calculated values, the configuring unit 155 configures output data using the water balance calculated values. That is to say, the configuring unit 155 configures output data regarding the future circulation state of water resources, based on the future water balance calculated values. The output data may be, for example, the water balance calculated values themselves, information corresponding to results of comparison with a predetermined threshold value, or information on the presence or absence of a risk. The information corresponding to results of comparison with a predetermined threshold value may be, for example, information representing comparison results, information prepared in advance for each comparison result, or information such as a graph showing the transition of the water balance calculated values in comparison with a predetermined threshold value or the like. The information on the presence or absence of a risk may be information indicating that there is a risk or that there is no risk, information indicating the content of the risk, or the like.

In this embodiment, if the calculating unit 151 acquires information on the uncertainty, the configuring unit 155 configures output data by associating the water balance calculated values with the information on the uncertainty. For example, if a 95% confidence interval has been acquired by the calculating unit 151 as information on uncertainty, the configuring unit 155 may configure output data such that the calculated water balance calculated values and the 95% confidence interval thereof can be acquired. As a result of the output unit 160 or the like outputting the output data, the user of the information processing apparatus 1 can acquire future water balance calculated values quantified including a confidence interval.

The output unit 160 in this embodiment outputs information, for example, by displaying information on a display device provided in the information processing apparatus 1. In this embodiment, the output unit 160 outputs, for example, the output data configured using the configuring unit 155. That is to say, the output unit 160 can output information on the future circulation state of the water resources in the target area, based on the water balance calculated values and information indicating the uncertainty thereof.

The output unit 160 may be configured to output information, for example, by causing an unshown transmitting unit or the like to transmit the information to another apparatus via a network or the like. The output unit 160 may be considered to include or not to include an output device such as a display screen or a speaker. The output unit 160 may be realized by driver software for an output device, a combination of driver software for an output device and the output device, or the like.

In this embodiment, the information processing apparatus 1 may be configured to be able to reproduce the circulation state of the water resources in grids using a distributed water circulation model, connect the results of the calculations with pieces of position information on the grids, and display the results as geographic information to visualize the spatial distribution, thereby specifying important locations for water resource management. The monitoring information acquiring unit 143 may be configured to acquire monitoring information on important locations for water resource management, based on the results.

That is to say, in this case, the configuring unit 155 configures information on the circulation state of the water resources at each location in a predetermined area (hereinafter also referred to as location information) as output data, based on water balance calculated values corresponding to meshes acquired by the calculating unit 151, and pieces of position information respectively corresponding to the meshes. The location information is, for example, information in which position information and water balance calculated values corresponding to the meshes are associated. That is to say, for example, location information includes pieces of position information on a large number of meshes in the predetermined area, and the water balance calculated values corresponding thereto. It can be said that such location information is information indicating the spatial distribution of the water balance calculated values in the predetermined area. Note that location information is not limited to those including information on each mesh, and may be those including information on each of the locations that are divided so as to be larger than the meshes. It is also possible that such location information is obtained by the configuring unit 155 calculating information at each location based on position information and water balance calculated values of the meshes.

For example, the location information may be information representing the spatial distribution of various types of water balance. For example, the location information may be various types of information such as the spatial distribution of the amounts of water infiltrating as soil water, the spatial distribution of the amounts of water recharged as groundwater, the spatial distribution of the amounts of water flowing into a specific area as groundwater, and the spatial distribution of the amounts of water flowing out to the surface as spring water, and the spatial distribution of the amounts of water flowing into the river as river water.

The configuring unit 155 may acquire geographic information that is used to visually display the shape of the predetermined area. The geographic information is, for example, information that is used to display a map. Geographic information may be a two-dimensional map image, an aerial photograph, a satellite photograph, or the like of the predetermined area, or drawing information that is used to represent the shape of the predetermined area through rendering using predetermined software. Drawing information may represent a two-dimensional image, or may be information that makes it possible to draw a three-dimensional shape. Geographic information is, for example, but is not limited to, information stored in the storage unit 110 in advance. For example, the processing unit 140 may be configured to be able to acquire geographic information transmitted from an external server or the like that can communicate with the information processing apparatus 1.

If the location information is configured in this manner, the output unit 160 outputs the configured location information. For example, the output unit 160 outputs location information based on the geographic information such that the user can visually recognize the location information together with the shape of the predetermined area corresponding to the geographic information. Outputting information so that the user can visually recognize the information means, for example, displaying the information on a display or the like, but is not limited in this manner. For example, outputting information means forming an image on paper or the like, transmitting information in order to display the information or form an image on another device, and the like. The user can easily understand the spatial distribution of water balances by visually recognizing location information using the output unit 160. Note that the output unit 160 may output location information without using geographic information. Location information includes information in which position information and the water balance calculated values of each location are associated with each other. Therefore, even in this case, the user can easily understand the spatial distribution of the water balances. Note that, even in this case, the output unit 160 may be configured to make it possible to visually recognize the state of the distribution of the water balance calculated values based on position information at each location.

When location information is output, it is preferable that the location information is displayed in various display modes in different manners for each location according to the magnitude or the like of the water balance calculated value of that location. There are various examples of different display modes for different locations, such as a heat map-like image in which hues and shades differ according to the magnitude of the water balance calculated values, an example in which font sizes and weights differ according to the magnitude of the water balance calculated values in the case in which the water balance calculated values are shown as numerical values or the like, and an example in which the water balance calculated values are represented as bar graphs or the like. By outputting location information in such display modes, it is possible to enable the user to understand the spatial distribution of the water balances more intuitively.

The configuring unit 155 may acquire observation data regarding the balance of water resources corresponding to one or more meshes, and configure location information based on the water balance calculated values acquired by the calculating unit 151, the location information, and the observation data. In this case, the values of predetermined parameters calculated by the configuring unit 155 based on the water balance calculated values and values of predetermined parameters that are based on observation data may be included in the location information.

If location information is configured based on observation data in such a manner, for example, for locations for which observation data is available, it is possible to enable the user to grasp a more accurate spatial distribution of the water balances by outputting observation data that is more reliable than the calculated water balance values. In addition, in this case, for locations for which observation data is available, water balance calculated values and observation data may be output in association with each other. As a result, the user can easily understand the degree of reproducibility of the distributed water circulation model, and reference it when using location information.

If the location information is output in this manner, the user can easily understand the spatial distribution of the water balances in the predetermined area, using the location information. By checking the difference between the water balance at each location in the predetermined area and the water balances of other locations, it is easy to determine the locations to which attention is to be paid in considering water resource management measures in the predetermined area.

Note that the configuring unit 155 may be configured to include, in the location information, information on the result of a comparison between the values of predetermined parameters indicating the circulation state of the water resources at the locations, and a predetermined threshold value. Here, the values of the predetermined parameters may be water balance calculated values, aggregated water balance calculated values, or the values of other parameters. For example, the configuring unit 155 may configure location information by comparing the water balance calculated values with a predetermined threshold value for each mesh, and then associating the result of the comparison with the position information corresponding to the mesh. As a result of such location information being output by the output unit 160, the user can easily understand the spatial distribution of locations where the water balance calculated values are above the threshold value (or locations where the water balance calculated values are below the threshold value). By precisely setting the threshold value according to the purpose, the user can easily determine the locations to which attention is to be paid in considering water resource management measures in the predetermined area. Even in this case, it is preferable that there are different display modes for different locations depending on whether the comparison result satisfies a predetermined condition (positive value, negative value, etc.) or on the magnitude of the comparison result.

Here, the predetermined threshold value may be a value corresponding to the average of the values of the predetermined parameter at the locations in the predetermined area, for example.

For example, location information may be information on the results of a comparison between the value of effective rainfall amount at each location and the effective rainfall amount per unit area of the predetermined area (i.e., the average value of effective rainfall amount at each location). In this case, the user can pay attention to locations where the effective rainfall amount value exceeds the average value as important locations in managing recharge amount or the like.

Alternatively, for example, location information may be information on the results of a comparison between the value of the river discharge at each location and the river discharge per unit watershed of the predetermined area (i.e., the average value of river discharges at each location along the river). In this case, the user can pay attention to locations where the value of the river discharge exceeds the average value as important locations in managing the river discharge.

Next, an example of the flow of an operation of the information processing apparatus 1 will be described.

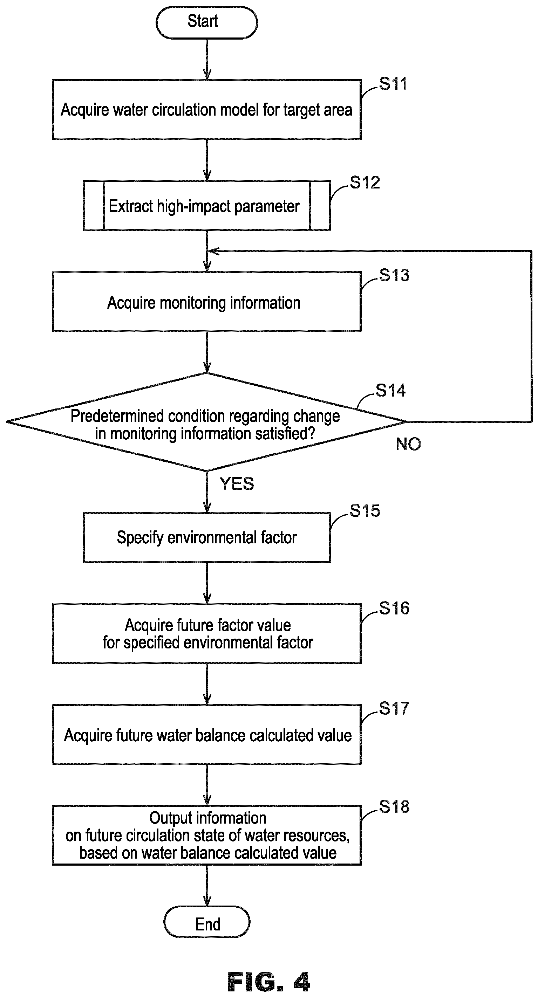

FIG. 4 is a flowchart showing an example of an operation of the information processing apparatus 1.

(Step S11) The processing unit 140 acquires information on a water circulation model for a target area. The acquired information is, for example, accumulated in the model information storage unit 111. This allows the calculating unit 151 to acquire water balance calculated values in the target area, using the water circulation model.

(Step S12) The processing unit 140 performs high-impact parameter extracting processing.

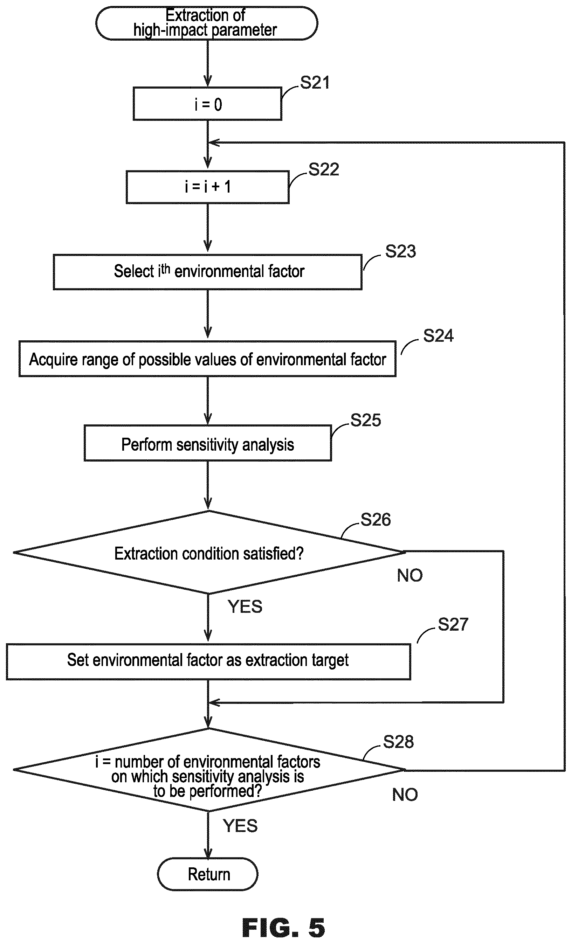

FIG. 5 is a flowchart showing an example of high-impact parameter extracting processing by the information processing apparatus 1.

(Step S21) The processing unit 140 sets zero to a counter i.

(Step S22) The processing unit 140 increments the counter i.

(Step S23) The processing unit 140 selects an i^{th} environmental factor on which a sensitivity analysis is to be performed.

(Step S24) The processing unit 140 acquires the range of possible values of the selected environmental factor.

(Step S25) The processing unit 140 performs a sensitivity analysis while changing the value of the selected environmental factor.

(Step S26) The processing unit 140 determines whether or not the result of the sensitivity analysis satisfies a predetermined extraction condition. For example, as described above, a condition that the ratio of water balance calculated values before and after the value is changed is equal to or greater than a predetermined threshold value may be set as an extraction condition. If the extraction condition is satisfied, the procedure advances to step S27, or otherwise the procedure advances to step S28.

(Step S27) The processing unit 140 sets the selected environmental factor as the extraction target. That is to say, the processing unit 140 sets the selected environmental factor so as to be extracted as a high-impact parameter.

(Step S28) The processing unit 140 determines whether or not the counter i matches the total number of environmental factors on which the sensitivity analysis is to be performed. If they match each other, the extracting processing is ended, and the procedure returns to the upper-level processing. If they do not match each other, the procedure returns to step S22.

(Step S13) Returning to FIG. 4, the processing unit 140 acquires monitoring information.

(Step S14) The processing unit 140 determines whether or not a predetermined condition regarding a change in the monitoring information is satisfied. If it is determined that the predetermined condition is satisfied, the procedure advances to step S15, or otherwise the procedure returns to step S13.

(Step S15) The processing unit 140 specifies an environmental factor in the case in which the predetermined condition is satisfied. The processing unit 140 can, for example, specify an environmental factor corresponding to the monitoring information that satisfies the predetermined condition.

(Step S16) The processing unit 140 acquires a future factor value for the specified environmental factor.

(Step S17) The processing unit 140 acquires future water balance calculated values in the target area, using the future factor value.

(Step S18) The processing unit 140 outputs information on the future circulation state of water resources, based on the acquired water balance calculated values.

If the processing in step S18 is performed, the user can obtain information on the future circulation state of water resources in the target area. The user can utilize the acquired information to conduct research on risks related to water resources and to make decisions regarding taking actions to prevent manifestation of such risks.

When the information processing apparatus 1 performs this series of processing, information prepared by the user and input to the information processing apparatus 1 may be used as appropriate in part of the processing. For example, the future factor values may be automatically obtained by the processing unit 140 from information resources accessible by the information processing apparatus 1 via a network or the like, or values obtained by the user by separately examining scenarios or the like may be used as the future factor values. The monitoring information automatically input from measuring apparatus or the like may be acquired by the processing unit 140, or the monitoring information measured and input to the information processing apparatus 1 by the user may be acquired by the processing unit 140.

The acquisition of monitoring information and the determination of whether or not a predetermined condition regarding a change thereof may be performed, for example, periodically each time a predetermined period of time has elapsed. It is sufficient that the period of time is shorter than the time it takes for a change in environmental factors to occur. For example, the processing may be performed periodically, such as every predetermined number of days or every year.

In this embodiment, in order to acquire information on the uncertainty of water balance calculated values based on the uncertainty of the distributed water circulation model as described above, for example, the information processing apparatus 1 may perform processing regarding quantitative evaluation as follows. Such processing may be performed, for example, as appropriate after a water circulation model is acquired in step S11 in the above-described flowchart.

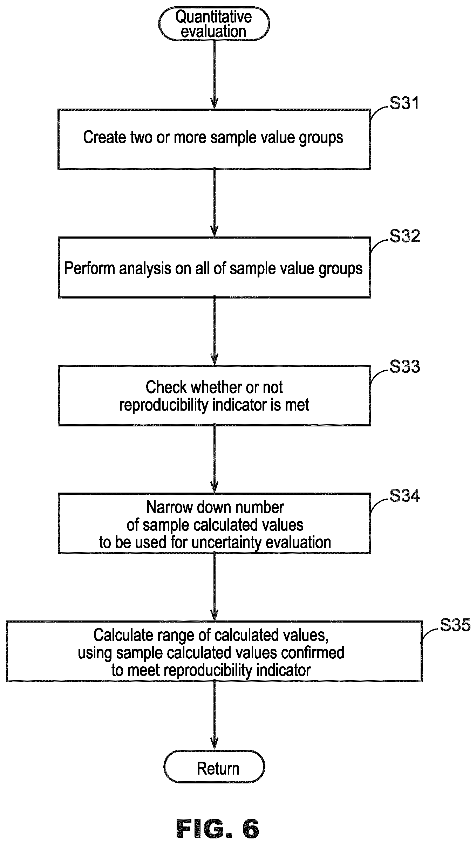

FIG. 6 is a flowchart showing an example of quantitative evaluation that is performed by the information processing apparatus 1.

(Step S31) The processing unit 140 creates two or more sample value groups by using, for example, the Latin hypercube sampling method.

(Step S32) The processing unit 140 performs an analysis on each of the created sample value groups, using the distributed water circulation model, to acquire sample calculated values.

(Step S33) The processing unit 140 checks whether or not each combination of sample value groups and the sample calculated values meets a reproducibility indicator based on observation data.

(Step S34) The processing unit 140 narrows down the number of sample calculated values to be used for an uncertainty evaluation, based on the result of the check regarding reproducibility.

(Step S35) Using the sample calculated values, the processing unit 140 calculates the uncertainty of the water balance calculated values, that is, the range of possible water balance calculated values. Thereafter, the quantitative evaluation is ended.

By performing an uncertainty evaluation in this manner, it is possible to obtain information representing the uncertainty of water balance calculated values resulting from the uncertainty of the distributed water circulation model.

The system in which water circulates in nature is characterized as an uncertain system from which basic information is not fully available, as a non-steady system that can fluctuate constantly, and as an open system with no clear boundaries. Since it is impossible to obtain evaluation results based on an understanding of all events related to the water circulation in nature, it is important to be able to predict events occurring with respect to the water circulation in nature with the highest possible accuracy.

Conventionally, when managing water resources, the detection of abnormalities is generally based on measured values water balance items that are directly monitored. For example, an abnormality is detected when the measured value of the measurable water level of a pumping well is abnormal. Since the results indicating the occurrence of abnormalities related to water circulation are monitored, it is not possible to prevent manifestation of risks related to water circulation in advance.

On the other hand, according to this embodiment, monitoring information associated with an environmental factor that acts on water circulation is used to acquire water balance calculated values in a target area based on the future factor value of the environmental factor corresponding to the monitoring information, in the case in which a predetermined condition regarding a change in the monitoring information is satisfied. Even in a phase where the expected situation regarding environmental factors is changing due to climate change, changes in surrounding land use trends, or the like, information on the future circulation state of water resources reflecting the situation in such a phase can be obtained when a change in the monitoring information satisfies the predetermined condition. Accordingly, the user can utilize the obtained information for water resource management activities, such as evaluating risks related to water resources in a target area, or conducting research and making decisions on implementation of measures to prevent manifestation of such risks. In other words, the use of the information processing apparatus makes it possible to predict events occurring with respect to the water circulation in nature with high accuracy, and to obtain information useful for accurately understanding risks related to water resources in the target area and implementing measures to prevent manifestation of such risks.

The use of the information processing apparatus or the information processing method as described above makes it possible to accurately implement preventive and adaptive approaches to the management of water resources. That is to say, it is possible to detect at an early stage the possibility of a situation in the target area that was not anticipated in the initial prediction, set improvement goals, and formulate plans for the use of water resources. As plans for the use of water resources are implemented, it will be possible to scientifically and objectively verify, based on observation data, whether or not the goals are being achieved, and to provide appropriate feedback for plan revisions and the like.

The information on the future circulation state of water resources is output together with information indicating the uncertainty of the water balance calculated values. Accordingly, water resource management activities can be performed more reliably based on the quantified future water balance calculated values.

The environmental factors that have a greater degree of influence on the water circulation may differ for each target area. By using more dominant environmental factors and related monitoring information in each target area to detect a change in the monitoring information or to acquire water balance calculated values corresponding thereto, the user can utilize more accurate information for water resource management activities. In addition, by using only relatively dominant environmental factors and related monitoring information to detect a change in the monitoring information or to acquire water balance calculated values, the burden required for acquiring monitoring information, acquiring future factor values, acquiring water balance calculated values, and the like can be reduced, and thus information that can be utilized for water resource management activities can be more easily obtained.

The processing in this embodiment may be realized by software. The software may be distributed by software downloads or the like. Furthermore, the software may be distributed in a form where the software is stored in a recording medium such as an optical disk.

The software that realizes the information processing apparatus 1 in this embodiment is the following sort of program. Specifically, this program is a program that is executed on a computer of the information processing apparatus 1, the program causing the computer of the information processing apparatus 1 to function as: a monitoring information acquiring unit that acquires monitoring information on an environmental factor related to a circulation state of water resources in a target area; a determining unit that determines whether or not a predetermined condition regarding a change in the monitoring information acquired by the monitoring information acquiring unit is satisfied; a factor value acquiring unit that acquires a future factor value that is a predicted future value of the environmental factor related to the change in the monitoring information, in a case in which it is determined that the predetermined condition is satisfied; a calculating unit that acquires a water balance calculated value regarding a balance of the water resources in the target area, based on the future factor value; and an output unit that outputs information on the future circulation state of the water resources in the target area, based on the water balance calculated value.

In this embodiment, the information processing apparatus 1 may also be said to perform the following information processing method. That is to say, this information processing method includes: an acquiring step of acquiring monitoring information on an environmental factor related to a circulation state of water resources in a target area; a determining step of determining whether or not a predetermined condition regarding a change in the monitoring information is satisfied; a factor value acquiring step of acquiring a future factor value that is a predicted future value of the environmental factor related to the change in the monitoring information, in a case in which it is determined that the predetermined condition is satisfied; and a calculating step of acquiring a water balance calculated value regarding a balance of the water resources in the target area, based on the future factor value.

In this information processing method, it is also possible that in the factor value acquiring step, information indicating uncertainty of the future factor value is further acquired, and in the calculating step, information on uncertainty of the water balance calculated value is further acquired based on the future factor value and the information indicating uncertainty thereof. In this case, it is also possible that the information processing method further includes a comparing step of comparing the water balance calculated value with a predetermined threshold value, based on the information on uncertainty of the water balance calculated value. This information processing method can be used to evaluate risks related to the water resources in the target area or to conduct research on implementation of measures to prevent manifestation of such risks.

In this information processing method, only some of the steps may be performed by the information processing apparatus 1. In this case, the other steps may be performed by another apparatus or an operator, and the results thereof may be input to the information processing apparatus 1 so that some of the steps are performed. Also, some of the steps may be performed by the information processing apparatus 1, and the results thereof may be used by another apparatus or an operator to perform the other steps. For example, the calculating step may be performed by the information processing apparatus 1, and the other steps may be performed by an operator as appropriate using a measuring device, another computer, or the like.

Furthermore, in the foregoing embodiment, each of the extraction of high-impact parameters in a target area, the acquisition of uncertainty of the water balance calculated value resulting from the water circulation model, the acquisition of uncertainty of the future factor value, and the like may or may not be performed.

Hereinafter, an application example of the information processing apparatus 1 and the information processing method of the foregoing embodiment will be described.

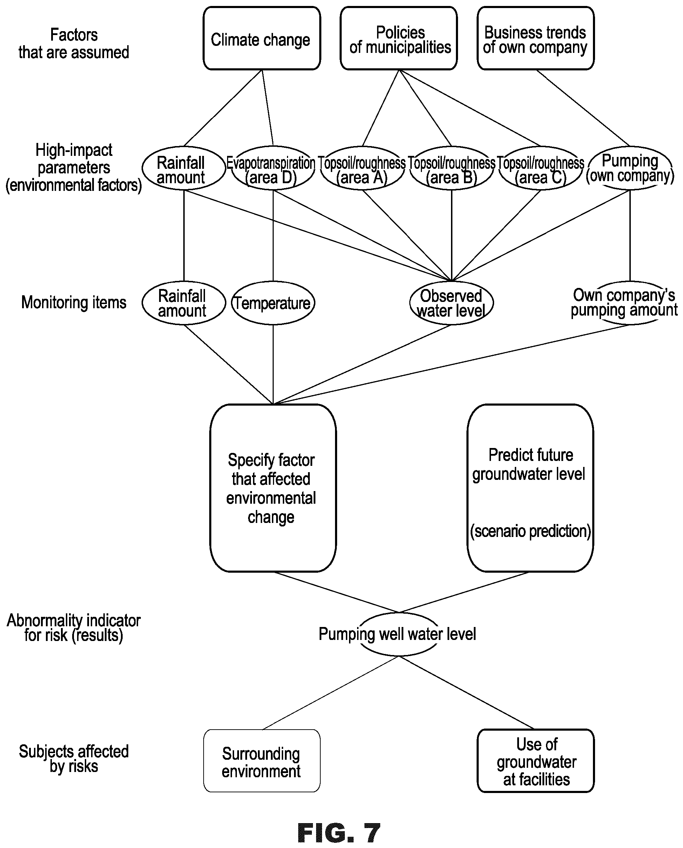

FIG. 7 is a diagram showing a relationship between elements regarding water circulation in a target area according to an application example of this embodiment.

This diagram shows items regarding an example of a risk related to water circulation, factors thereof, related environmental factors, and corresponding monitoring items, and the like in one target area. The diagram shows that in this target area, for example, an abnormality in the water level of a pumping well is a manifestation of the risk, which may prevent the use of groundwater at facilities in the target area.

Factors that are assumed to have the potential to affect pumping well water level abnormalities include, for example, climate change, land use and other policies of municipalities in the target area, business trends of companies (e.g., our/their own company) that conduct business activities in the target area, and the like.

In this embodiment, the environmental factors that function as high-impact parameters extracted through sensitivity analysis in this target area are the rainfall amount, the amount of evapotranspiration in a predetermined area D, the topsoil and roughness in each of predetermined areas A, B, and C, and our/their own company's pumping amount. Of these, the rainfall amount and the amount of evapotranspiration can be said to be environmental factors that are affected by climate change, the topsoil and roughness can be said to be environmental factors that are affected by policies of municipalities, and our/their own company's pumping amount can be said to be an environmental factor that is affected by business trends of our/their own company.

For these environmental factors, corresponding monitoring items are set. That is to say, the rainfall amount corresponds to the environmental factor that is the rainfall amount. The monitoring item that is the temperature corresponds to the amount of evapotranspiration. The monitoring item that is the observed water level corresponds to each of the rainfall amount, the amount of evapotranspiration, the topsoil and roughness, and the pumping amount. The monitoring item that is our/their own company's pumping amount corresponds to the pumping of our/their own company.

Where such a relationship of elements regarding water circulation is set, in this embodiment, in the case in which a predetermined condition regarding a change in the monitoring items is satisfied, an environmental factor that affected the change in the monitoring items is specified. Then, a future factor value is acquired for the specified environmental factor, and a future water balance calculated value is acquired based on the future factor value. For example, the future groundwater level is obtained as the water balance calculated value. The future factor value can be prepared, for example, by performing scenario prediction.

The future groundwater level is obtained in this manner, and thus based on this information, it is possible to conduct research on, for example, the existence of risks of abnormalities in the pumping well water level, implementation of measures to prevent manifestation of such risks, and the like.

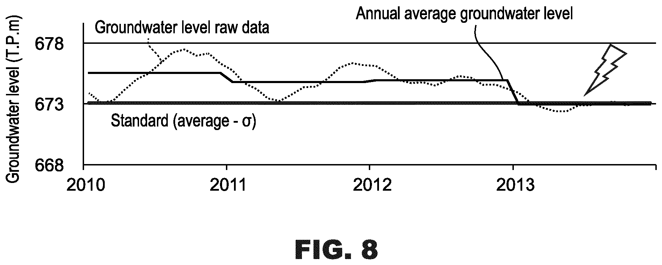

FIG. 8 is a diagram showing an example of monitoring information according to this application example.

This diagram shows water levels as observation data (groundwater level raw data and annual average groundwater level) according to the monitoring items of the groundwater level. With respect to the monitoring items, the annual average groundwater level being below a predetermined standard value is taken as the predetermined condition. In the diagram, the annual average groundwater level fell below the standard value in 2013, and thus it is determined that the predetermined condition was satisfied in 2013. In this application example, the standard value is the value obtained by subtracting the standard deviation from the average value.

In response to a change occurring in the groundwater level in this manner, an environmental factor is specified. In this case, where the rainfall amount, the amount of evapotranspiration, the topsoil and roughness, and the pumping amount correspond to the monitoring items of the groundwater level, which of these environmental factors caused the change in the groundwater level is specified. In this embodiment, first, whether or not the rainfall amount is the cause is checked using a groundwater level tracking model in which the rainfall amount is taken as an explanatory variable. If the rainfall amount cannot be said to be the cause, whether or not the pumping amount is the cause is checked by determining whether or not the groundwater level changes following changes in the pumping amount. If the pumping amount cannot be said to be the cause, environmental factors are specified as the amount of evapotranspiration and the land use being the cause.

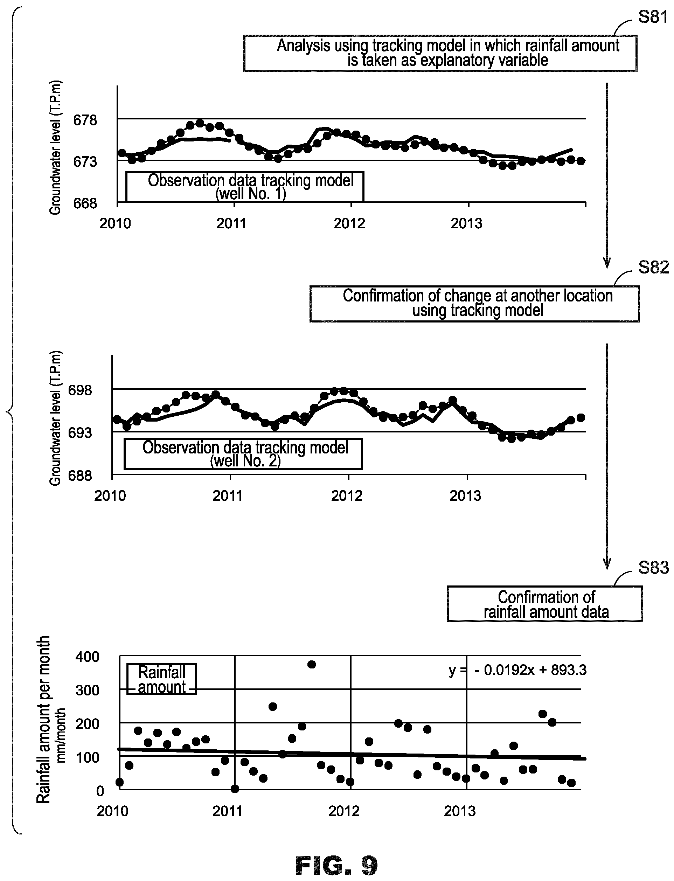

FIG. 9 is a diagram illustrating environmental factor specifying processing according to this application example.

As shown in this diagram, first, an analysis is performed using a groundwater level tracking model in which the rainfall amount at a predetermined location (well No. 1) is taken as an explanatory variable (Step S81). In this case, at the predetermined location, it is confirmed that the groundwater level transition (circles) obtained by the tracking model follows the actual observation data (thick solid line).

Once it is confirmed that changes in the groundwater level at the predetermined location can be tracked using the rainfall amount as the explanatory variable, at another location (well No. 2) as well, an analysis is performed in a similar manner using the groundwater level tracking model in which the rainfall amount is taken as an explanatory variable (Step S82). In this case as well, at this location, it is confirmed that the groundwater level transition (circles) obtained by the tracking model follows the actual observation data (thick solid line). This leads to a stronger presumption that the rainfall amount is the cause, and therefore, the rainfall amount is specified as the environmental factor that was the cause.

When observation data of the rainfall amount was actually checked, a gradual decreasing trend was observed (Step S83). Accordingly, from this point of view as well, it is highly likely that the decrease in the rainfall amount was the cause.

Once the rainfall amount is specified as the environmental factor, a future factor value of the rainfall amount was acquired using data such as climate change predictions. Examples of the data such as climate change predictions may include data of "database for Policy Decision making for Future climate change (d4PDF)". As future factor values, for example, information indicating the frequency distribution of the rainfall amount is obtained for each future temperature increase. The rainfall amount prediction data at the target area can be created, for example, by creating a regression equation in which the temperature increase value is taken as an explanatory variable and performing processing with the created regression equation. In this case, it is preferable to obtain information indicating the uncertainty of the rainfall amount prediction data, using standard deviation or the like, based on the rainfall amount prediction data and the uncertainty of the temperature prediction data.

There are several possible scenarios for future climate changes.

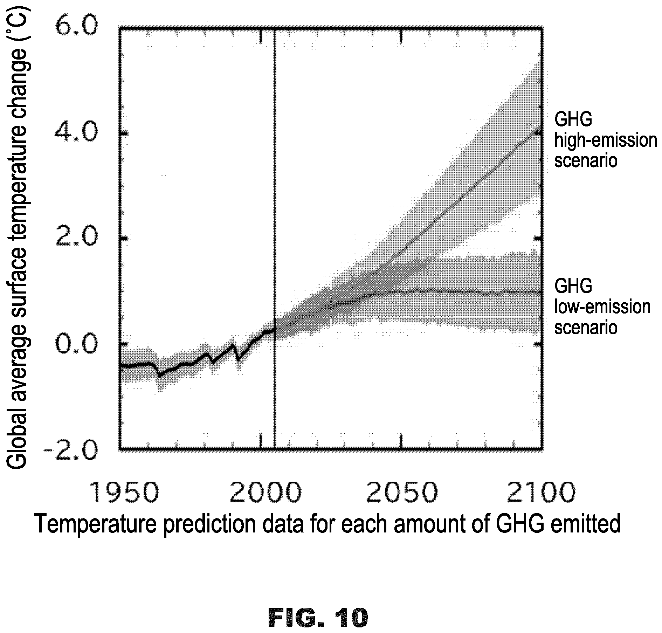

FIG. 10 is a diagram showing an example of temperature prediction data according to this application example.

This diagram shows prediction results of global average surface temperature changes for each amount of greenhouse gas (GHG) emitted. In this case, temperature prediction results in two scenarios, i.e., a low-emission scenario in which the amount of GHG emitted has been reduced and a high-emission scenario in which the amount of GHG emitted has remained high. In each scenario, a higher-temperature scenario and a lower-temperature scenario are further conceivable, and the range is shown in color.

As shown in the diagram, in the low-emission scenario, future temperature increases are suppressed to a relatively low level. On the other hand, in the high-emission scenario, future temperature increases will continue. Future factor values of the rainfall amount in both scenarios can be acquired to acquire future water balance calculated values in the respective scenarios.

If an increase in the temperature becomes large, the rainfall amount in the target area becomes small, and thus, if the two scenarios as described are conceivable, future factor values of the rainfall amount only in the scenario that could cause a more serious situation regarding groundwater levels may be acquired to acquire future water balance calculated values. In this case, the processing volume of the information processing apparatus 1 can be reduced, and the risks can be examined from a safer side.

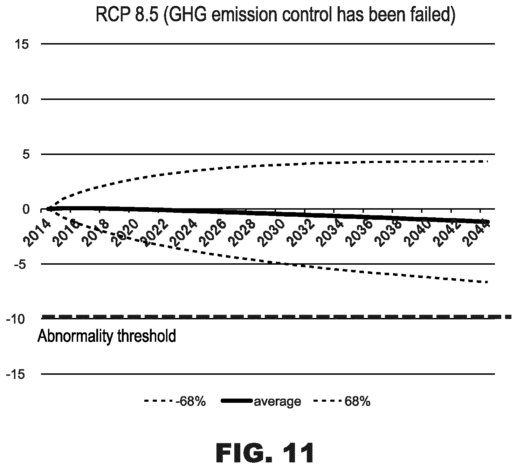

FIG. 11 is a diagram showing an example of information indicating the future circulation state of water resources according to this application example.

This diagram shows results of future groundwater level predictions for the high-emission scenario in which the GHG emission control has been failed. The solid line indicates an average scenario, and the thin dashed lines indicate scenarios in which the rainfall amount is larger or smaller, which are at the boundary of the 68 percent confidence interval.

In the diagram, where the abnormality threshold at which the groundwater level is considered abnormal is indicated by the thick dashed line, it can be seen that the groundwater level is above the abnormality threshold in the average scenario as well as in the scenario with the smaller rainfall amount. That is to say, this information indicates that groundwater levels are not likely to reach an abnormality even under the possible minus 1σ scenario. Therefore, it can be confirmed that the use of water resources in the target area can continue in a sustainable manner in the future by continuing to manage water resources in the current manner.

The above-described application example shows the case in which the rainfall amount is specified as the cause of the change in the monitoring information, but if other environmental factors are specified as the cause of the change in the monitoring information, for example, the future factor values may be acquired in the following manner.

For example, if the pumping amount (water use) in the target area is specified as the cause, for example, future factor values can be acquired by estimating the future pumping amount in the target area based on scenarios regarding changes in water demand in the target area.

Changes in water demand in the target area can occur due to changes in population and industrial structure. Water use for domestic purposes may decrease due to a decline in population or the spread of water-saving devices and the like. Industrial water use in industry, agriculture, fisheries, and the like may also change depending on the industry and market trends related to the use of the water. Such changes may be understood, for example, from hydrological survey results or white papers prepared by municipalities or public organizations in the target area, or from groundwater conservation measures. Based on such information, basic scenarios can be created to acquire future factor values.

In addition to the basic scenarios, future factor values can also be acquired by creating scenarios for domestic water assuming the case in which the population is maintained or even increases due to successful regional revitalization measures, and for industrial water assuming market expansion or changes in demand trends. Such scenarios can be also created using plans and white papers prepared by municipalities or the like, and the risks can be examined from a safer side by intentionally creating scenarios in which water use expands in this manner to prepare future factor values and acquiring future water balance calculated values.

Furthermore, for example, if environmental factors related to land use such as the topsoil or roughness or the amount of evapotranspiration in the target area are specified as the cause, future factor values can be acquired by estimating values indicating soil properties such as the topsoil or roughness in the target area, based on scenarios considering land use changes.

Changes in land use in the target area can occur due to changes in population and industrial structure. Generally, official plans such as master plans that establish future land use policies based on changes in population and industrial structure have been established in various areas, and several scenarios can be created on the basis of such official plans. For example, the following scenarios can be created: a scenario in which the land use situation remains as it is now, a scenario in which the master plan succeeds and the land use situation changes as planned, a scenario in which the master plan fails and forest and agricultural lands decrease or become relatively barren, and the like.

For each of these land use change scenarios, a scenario in which a landslide occurs and the topsoil in the area specified in the hazard map is washed away and a scenario in which such a disaster does not occur may also be created. This is because if the topsoil is washed away, the same geology as the underlying wasteland may appear, and the roughness coefficient may change.

### Others

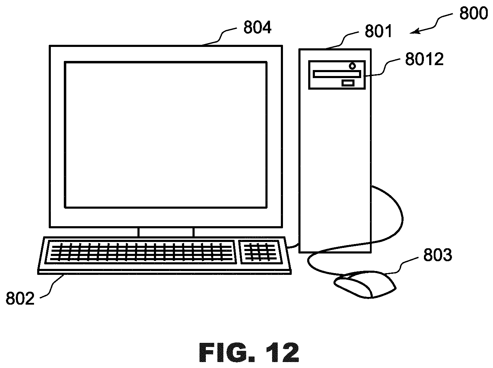

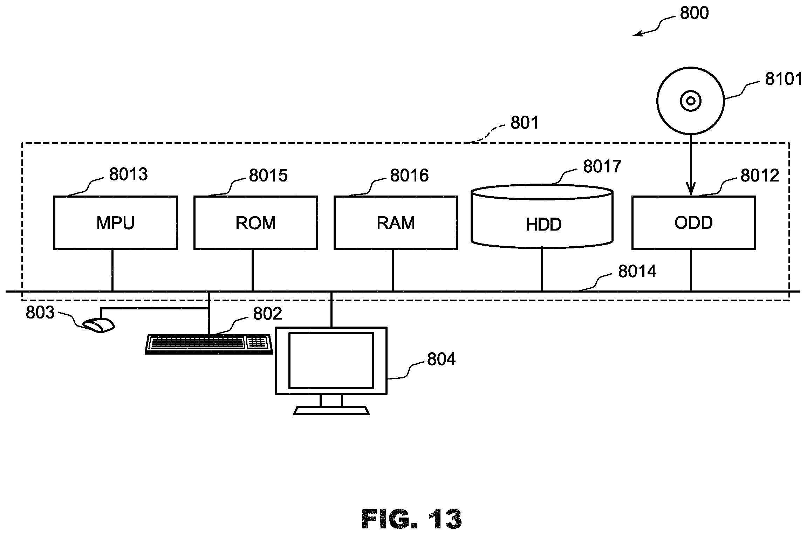

FIG. 12 is a schematic view of a computer system 800 in the foregoing embodiment. FIG. 13 is a block diagram of the computer system 800 in the embodiment.

These drawings show a configuration example of a computer that executes the programs described in this specification to realize the information processing apparatus and the like in the foregoing embodiment. The foregoing embodiment may be realized using computer hardware and a computer program executed thereon.

The computer system 800 includes a computer 801 including an optical disk drive, a keyboard 802, a mouse 803, and a monitor 804.

The computer 801 includes, in addition to the optical disk drive (ODD) 8012, an MPU 8013, a bus 8014 connected to the optical disk drive 8012 and the like, a ROM 8015 in which a program such as a boot up program is stored, a RAM 8016 that is connected to the MPU 8013 and is a memory in which a command of an application program is temporarily stored and a temporary storage area is provided, and a hard disk (HDD) 8017 in which programs such as an application program and a system program and data are stored. Although not shown, the computer 801 may further include a network card that provides connection to a LAN.

Each program for causing the computer system 800 to execute the functions of the information processing apparatus and the like in the foregoing embodiment may be stored in a optical disk 8101 that is inserted into the optical disk drive 8012, and be transmitted to the hard disk 8017. Alternatively, the program may be transmitted via a network (not shown) to the computer 801 and stored in the hard disk 8017. At the time of execution, the program is loaded into the RAM 8016. The program may be loaded from the optical disk 8101, or may be loaded directly from a network.

The program does not necessarily have to include, for example, an operating system (OS) or a third party program to cause the computer 801 to execute the functions of the information processing apparatus and the like in the foregoing embodiment. The program may only include a command portion to call an appropriate function (module) in a controlled mode and obtain desired results. The manner in which the computer system 800 operates is well known, and thus a detailed description thereof has been omitted.

It should be noted that, in the program, in a transmitting step of transmitting information, a receiving step of receiving information, or the like, processing that is performed only hardware such as processing that is performed by a modem or an interface card in the transmitting step (processing that can be performed only by hardware) is not included.

Furthermore, the computer that executes the program may be constituted by a single computer, or constituted by multiple computers. That is to say, centralized processing may be performed, or distributed processing may be performed.

Furthermore, in the foregoing embodiment, two or more constituent elements in one apparatus may be physically realized by one medium.

In the foregoing embodiment, each process (function) may be realized as centralized processing using a single apparatus (system), or may be realized as distributed processing using multiple apparatuses (in this case, the entire system constituted by multiple apparatuses that perform distributed processing may be regarded as one "apparatus").

Furthermore, in the foregoing embodiment, information transmission performed between constituent elements may be such that, for example, if two constituent elements for transmitting information are physically different from each other, the transmission is performed by one of the constituent elements outputting the information and the other constituent element accepting the information, or alternatively, if two constituent elements for transmitting information are physically the same, the transmission is performed by shifting from a processing phase corresponding to one of the constituent elements to a processing phase corresponding to the other constituent element.

Furthermore, in the foregoing embodiment, information related to the processing that is performed by each constituent element, for example, information that is to be accepted, acquired, selected, generated, transmitted, or received by each constituent element, information such as a threshold value, a numerical expression, or an address used by each constituent element in the processing and the like may be retained in an unshown recording medium temporarily or for a long period of time even if not specified in the description above. Furthermore, the information may be accumulated in the unshown recording medium by each constituent element or by an unshown accumulating unit. Furthermore, the information may be read from the unshown recording medium by each constituent element or by an unshown reading unit.

Furthermore, in the foregoing embodiment, if information used by each constituent element or the like, for example, information such as a threshold value, an address, or various setting values used by each constituent element in the processing may be changed by a user, the user may be or may not be allowed to change such information as appropriate even if not specified in the description above. If the user is allowed to change such information, the change may be realized by, for example, an unshown accepting unit that accepts a change instruction from the user and an unshown changing unit that changes information according to the change instruction. The unshown accepting unit may accept the change instruction, for example, by accepting information from an input device, by receiving information transmitted via a communication line, or by accepting information read from a predetermined recording medium. Furthermore, various modifications such as addition, deletion, modification, and order change of the steps may be made in the processing and procedures shown in the flowcharts above.

The present invention is not limited to the embodiment set forth herein. Various modifications are possible within the scope of the invention. Some of the constituent elements or the functions may be omitted in the foregoing embodiment.

### Industrial Applicability

As described above, the information processing apparatus according to the present invention has the effect of making it possible to acquire information on the circulation state indicating the future water balance in a target area, thus rendering this apparatus useful as an information processing apparatus and the like.

### List of Reference Numerals

- 1: Information processing apparatus
- 110: Storage unit
- 111: Model information storage unit
- 113: Monitoring information storage unit
- 115: Extraction information storage unit
- 130: Accepting unit
- 140: Processing unit
- 141: Extracting unit
- 143: Monitoring information acquiring unit
- 145: Determining unit
- 147: Factor value acquiring unit
- 151: Calculating unit
- 155: Configuring unit
- 160: Output unit
- 1411: Parameter setting unit
- 1412: Post-change calculating unit

## Claims

1. An information processing apparatus comprising:
a monitoring information acquiring unit that acquires monitoring information on an environmental factor related to a circulation state of water resources in a target area;
a determining unit that determines whether or not a predetermined condition regarding a change in the monitoring information acquired by the monitoring information acquiring unit is satisfied;
a factor value acquiring unit that acquires a future factor value that is a predicted future value of the environmental factor related to the change in the monitoring information, in a case in which it is determined that the predetermined condition is satisfied;
a calculating unit that acquires a water balance calculated value regarding a balance of the water resources in the target area, based on the future factor value; and
an output unit that outputs information on a future circulation state of the water resources in the target area, based on the water balance calculated value.

2. The information processing apparatus according to claim 1,
wherein the monitoring information relates to two or more environmental factors, and
the factor value acquiring unit specifies an environmental factor related to the change in the monitoring information, out of the two or more environmental factors, in a case in which it is determined that the predetermined condition is satisfied, and acquires the future factor value of the specified environmental factor.

3. The information processing apparatus according to claim 1, wherein the calculating unit acquires the water balance calculated value using a distributed water circulation model in which the circulation state of the water resources in the target area is modeled, the model being configured using a large number of meshes that are obtained by dividing the target area into a grid pattern and that are each subjected to application of values related to two or more environmental factors.

4. The information processing apparatus according to claim 1,
wherein the factor value acquiring unit further acquires information indicating uncertainty of the future factor value,
the calculating unit further acquires information on uncertainty of the water balance calculated value, based on the future factor value and the information indicating uncertainty thereof, and
the output unit performs the output, based on the water balance calculated value and the information indicating uncertainty thereof.

5. The information processing apparatus according to claim 4,
wherein the factor value acquiring unit acquires the future factor value and the information indicating uncertainty thereof, for each of two or more environmental factors, and
the calculating unit acquires, for each environmental factor, primary information on uncertainty of the water balance calculated value, based on the information indicating uncertainty of the future factor value of the environmental factor, and acquires information on uncertainty of the water balance calculated value by synthesizing (averaging) the primary information respectively acquired for the two or more environmental factors.

6. The information processing apparatus according to claim 1,
wherein the calculating unit is configured to be able to acquire the water balance calculated value based on values related to two or more environmental factors,
the information processing apparatus further comprises an extracting unit that extracts an environmental factor whose influence on the water balance calculated value is large enough to satisfy a predetermined condition, by causing the calculating unit to acquire the water balance calculated value while changing the value of each environmental factor, thereby performing a sensitivity analysis on an influence of the environmental factor on the water balance calculated value in the target area, and
the monitoring information acquiring unit is configured to acquire monitoring information on the environmental factor extracted by the extracting unit.

7. An information processing method comprising:
an acquiring step of acquiring monitoring information on an environmental factor related to a circulation state of water resources in a target area;
a determining step of determining whether or not a predetermined condition regarding a change in the monitoring information is satisfied;
a factor value acquiring step of acquiring a future factor value that is a predicted future value of the environmental factor related to the change in the monitoring information, in a case in which it is determined that the predetermined condition is satisfied; and
a calculating step of acquiring a water balance calculated value regarding a balance of the water resources in the target area, based on the future factor value,
wherein the method is used to evaluate a risk related to the water resources in the target area or to conduct research on implementation of a measure to prevent manifestation of the risk.

8. The information processing method according to claim 7,
wherein in the factor value acquiring step, information indicating uncertainty of the future factor value is further acquired,
in the calculating step, information on uncertainty of the water balance calculated value is further acquired based on the future factor value and the information indicating uncertainty thereof, and
the information processing method further comprises a comparing step of comparing the water balance calculated value with a predetermined threshold value, based on the information on uncertainty of the water balance calculated value.

9. A program for causing a computer to function as:
a monitoring information acquiring unit that acquires monitoring information on an environmental factor related to a circulation state of water resources in a target area;
a determining unit that determines whether or not a predetermined condition regarding a change in the monitoring information acquired by the monitoring information acquiring unit is satisfied;
a factor value acquiring unit that acquires a future factor value that is a predicted future value of the environmental factor related to the change in the monitoring information, in a case in which it is determined that the predetermined condition is satisfied;
a calculating unit that acquires a water balance calculated value regarding a balance of the water resources in the target area, based on the future factor value; and
an output unit that outputs information on a future circulation state of the water resources in the target area, based on the water balance calculated value.
